# EUROPEAN PATENT APPLICATION

(11) **EP 4 040 402 A2**
(43) Date of publication of application: **10.08.2022**
(21) Application number: 22177208.0
(22) Date of filing: 03.06.2022
(51) Int. Cl.: G06V 20/52, G06V 10/94

(54) **SYSTEM AND METHOD FOR OBJECT DETECTION, AND MOVABLE DEVICE**

(30) Priority: 10.06.2021 CN 202110650431
(71) Applicant: Apollo Intelligent Connectivity (Beijing) Technology Co., Ltd., Beijing 100176 (CN)
(72) Inventor: CUI, Zhiyang, Beijing, 100176 (CN); CAO, Liang, Beijing, 100176 (CN)
(74) Representative: Maiwald Patent- und Rechtsanwaltsgesellschaft mbH

(57) **Abstract**

There is a system for object detection, a movable device, and a method for object detection. The system includes: a cloud platform (110) configured with an object information database (111), and a movable device (120) communicated with the cloud platform (110), provided with a camera (121) and installed with an object detection client (122). The camera (121) is configured to capture a surrounding environment to obtain video. The object detection client (122) is downloaded and installed by the movable device (120) from an object detection platform (130), and is configured to download the object information database (111) from the cloud platform (110), and perform object recognition processing on the video captured by the camera (121) according to the object information database (111), obtain object positioning information, and send the object positioning information to the cloud platform (110).

## Description

### TECHNICAL FIELD

The disclosure relates to a field of data processing technologies, specifically to the field of Internet of Things and big data, and in particular to a system for object detection, a movable device, and a method for object detection.

### BACKGROUND

Security monitoring systems in present market are mainly fixed security cameras. A fixed security camera is installed at a fixed place to capture people and objects appeared within a fixed field of view. In some scenes of event processing, relevant staff recognizes target objects in video captured by the fixed security camera in order to find clue information of special people.

### SUMMARY

The present disclosure provides a system for object detection with wide field of view and high detection efficiency, which may be applied to a scene of event processing.

According to a first aspect of the disclosure, a system for object detection is provided. The system includes:
a cloud platform, configured with an object information database;
a movable device, communicated with the cloud platform, provided with a camera and installed with an object detection client; in which,
the camera is configured to capture a surrounding environment to obtain video;
the object detection client is downloaded and installed by the movable device from an object detection platform, and is configured to download the object information database from the cloud platform, and perform object recognition processing on the video captured by the camera according to the object information database, obtain object positioning information, and send the object positioning information to the cloud platform.

In some embodiments of the present disclosure, the system further includes an event processing terminal communicated with the cloud platform, in which,
the cloud platform is configured to convert the object positioning information into corresponding clue information, and send the clue information to the event processing terminal;
the event processing terminal is configured to send an event processing result based on the clue information to the cloud platform.

In some embodiments of the present disclosure, the cloud platform is configured to transfer incentive information to an account of an owner of the movable device according to the event processing result.

In some embodiments of the present disclosure, the object detection platform is communicated with the movable device, and configured with an installation package of the object detection client.

In some embodiments of the present disclosure, the movable device further includes:
a communication module, configured to communicate via network with the cloud platform and the object detection platform.

In some embodiments of the present disclosure, the movable device is a mobile terminal or a vehicle.

In some embodiments of the present disclosure, the object positioning information includes at least two of:
object information, geographic positioning information, and video related to the object information.

According to a second aspect of the disclosure, a movable device is provided. The movable device is provided with a camera and installed with an object detection client. The camera is configured to capture a surrounding environment to obtain video. The object detection client is downloaded and installed by the movable device from an object detection platform. The object detection client is configured to download an object information database from a cloud platform, and perform object recognition processing on the video captured by the camera according to the object information database, obtain object positioning information, and send the object positioning information to the cloud platform.

According to a third aspect of the disclosure, a method for object detection is provided. The method is applicable for a movable device and includes:
capturing, by a camera provided on the movable device, a surrounding environment to obtain video, in which the movable device is installed with an object detection client, and the object detection client is downloaded by the movable device from an object detection platform;
downloading, by the object detection client, an object information database from a cloud platform;
performing, by the object detection client, object recognition processing on the video captured by the camera according to the object information database;
obtaining, by the object detection client, object positioning information; and
sending, by the object detection client, the object positioning information to the cloud platform.

According to a fourth aspect of the disclosure, a computer readable storage medium having a computer program stored thereon is provided. The computer program is configured to implement a method for object detection when executed by a processor. The method includes:
capturing, by a camera provided on the movable device, a surrounding environment to obtain video, wherein the movable device is installed with an object detection client, and the object detection client is downloaded by the movable device from an object detection platform;
downloading, by the object detection client, an object information database from a cloud platform;
performing, by the object detection client, object recognition processing on the video captured by the camera according to the object information database;
obtaining, by the object detection client, object positioning information; and
sending, by the object detection client, the object positioning information to the cloud platform.

According to the technical solution of the present disclosure, the camera provided on the movable device is configured to capture the surrounding environment, thus expanding a field of view for shooting and coverage of information compared with a fixed camera. The movable device may realize the communication with the cloud platform by installing the object detection client. The movable device may perform object recognition processing on the video captured by the camera, and send the object positioning information to the cloud platform, which may improve efficiency and accuracy of the object detection.

It should be understood that the summary is not intended to identify key or important features of embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the disclosure, in which:
FIG. 1 is a schematic diagram illustrating a system for object detection according to an embodiment of the present disclosure.
FIG. 2 is a schematic diagram illustrating an operating principle of a movable device according to an embodiment of the present disclosure.
FIG. 3 is a schematic diagram illustrating a system for object detection according to another embodiment of the present disclosure.
FIG. 4 is flow chart illustrating a method for object detection according to an embodiment of the present disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

It is noted that data sources in a scene of event processing for police include: surveillance cameras, third-party behavior data (such as mobile phones, base stations, dominant Internet platforms, etc.). Relevant staff will obtain a clue of a target object according to information in the data sources, so as to deal with relevant events in time. However, since the existing surveillance camera is generally a fixed camera, there will be some shooting dead-corners, which may cause obtaining the clue of the target object to be difficult.

In view of the above problems, the present disclosure provides a system for object detection for obtaining object information by collecting a surrounding environment through a motion camera.

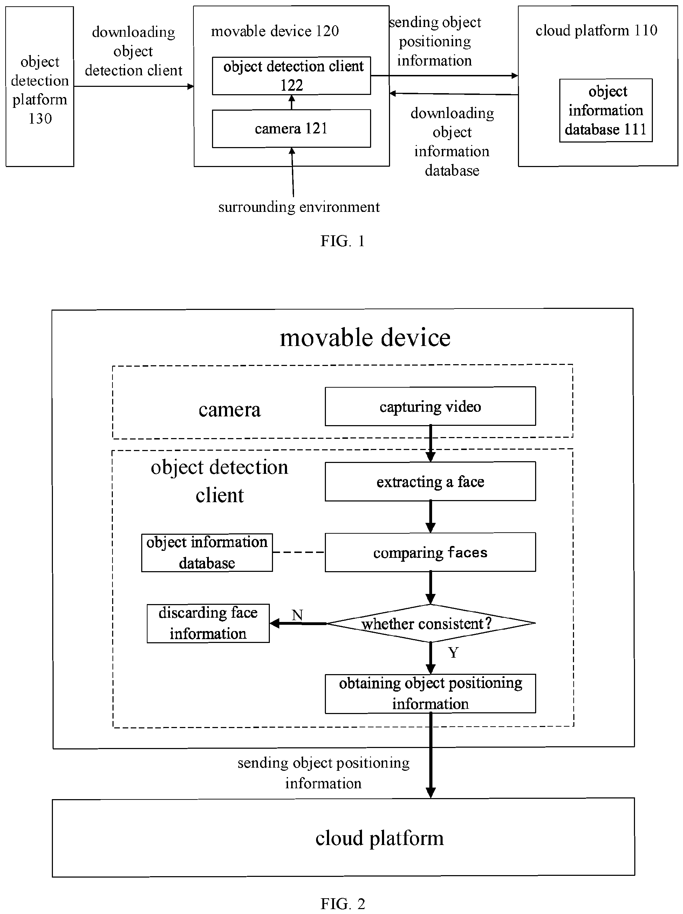

FIG. 1 is a schematic diagram illustrating a system for object detection according to an embodiment of the present disclosure. As illustrated in FIG. 1, the system for object detection includes a cloud platform 110, a movable device 120 and an object detection platform 130. The cloud platform 110 is configured with an object information database 111. The movable device 120 communicated with the cloud platform 110 is provided with a camera 121 and installed with an object detection client 122. The object detection client 122 is downloaded and installed by the movable device 120 from the object detection platform 130. In some embodiments of the present disclosure, the camera 121, provided on the movable device 120, is configured to capture a surrounding environment to obtain captured video. The object detection client 122 is configured to download the object information database 111 from the cloud platform 110, perform object recognition processing on the video captured by the camera 121 according to the object information database 111, obtain object positioning information, and send the object positioning information to the cloud platform 110.

As an example, in some scenes of event processing, the cloud platform 110 may be a cloud platform with law enforcement authority, that is, the cloud platform has relevant data information with the law enforcement authority. The object information database 111 configured on the cloud platform 110 may include information of special personnel concerned by law enforcement agencies, that is, information of target objects whose positioning information are to be obtained by the law enforcement personnel. For example, in a scene of missing children investigations, the object information database may include face image information or other relevant information of missing children.

In the embodiment of the present disclosure, the movable device 120, on the one hand, is configured to capture the surrounding environment to obtain the video of the surrounding environment, on the other hand, is configured to perform the object recognition processing according to the captured video, to determine a target object concerned by relevant staff, and send the positioning information of the target object to the cloud platform, thereby providing valuable information for the relevant staff to deal with events related to the target object. The movable device 120 may be a mobile terminal or vehicle, such as a smart phone, a laptop, a wearable device, an automobile, motorcycle, a bicycle and other movable terminal devices. Since the surrounding environment is captured through the camera on the movable device, any surrounding environment where the movable device is capable of reaching may be captured. Compared with the fixed camera, a field of view for capturing may be broaden, the amount of data collection may be increased and dead corners of capturing may be reduced.

The object detection client 122 is configured to perform the object recognition processing on the video, and may be an existing client that may realize the object recognition processing. In order to realize the object recognition processing on the video, the movable device 120 may download the object detection client 122 first and then install the client 122. As an example, the object detection platform 130 may be connected with the movable device 120, and provided with an install pack of the object detection client 122 thereon. The movable device 120 may download and install the object detection client 122 on the object detection platform 130.

For clarity, representative description will be made below by taking the movable device being a vehicle as an example. As an example, in a case that the movable device is the vehicle provided with the camera, the way for obtaining the object detection client by the vehicle may include as follows: an owner may search the corresponding object detection client on a terminal operating system of the vehicle and initiates a download request; after receiving the corresponding download request from the vehicle, the object detection platform sends the install pack of the object detection client to the operating system of the vehicle, and the install pack is installed on the vehicle by the owner. As updating of technologies, a version of the object detection client may also be updated. For the update of the version, the object detection client may display an update prompt page for guiding the owner to perform update operations. For example, the object detection client pops up an update operation page. In response to triggering an operation for confirming the update by the owner, namely, initiating the update request, the object detection platform sends a latest install pack of the object detection client to the operating system of the vehicle, after receiving the update request, so as to install the update of the object detection client. In addition, the update of the object detection client may also be update automatically. The specific update manner may be determined according to the object detection client actually used. Herein is only an example, will not limit the present disclosure.

Since the object detection client 122 is to enable the movable device to perform the object recognition processing on the captured video to determine a target object having a correspondence with the object information database, so as to obtain the positioning information of the target object, and to send the positioning information to the cloud platform 110. The movable device 120 may download the object information database 111 from the cloud platform 110, after installing the object detection client 122, so as to perform the object recognition processing on the captured video according to the object information database 111. As an example, an implementation for downloading the object information database 111 may include as follows: after the object detection client 122 is installed on the movable device 120, in response the object detection client 122 being opened for a first time, the object detection client 122 automatically initiates a request for downloading the object information database 111, or the request for downloading the object information database 111 is triggered by the relevant staff; the cloud platform 110 may send the object information database 111 to the object detection client 122 after receiving the request. It may be noted that since the object information database 111 may be constantly updated with changes of event processing, the object detection client 122 is also to update the downloaded object information database 111 synchronously to ensure accuracy of the object recognition. As an implementation, after the object information database 111 of the cloud platform 110 is updated, the cloud platform 110 may send corresponding update data to the object detection client 122 having downloaded the object information database 111. Therefore, the object information database downloaded to the object detection client 122 may be updated synchronously.

In the embodiment of the present disclosure, the object detection client 122 performs the object recognition processing on the video captured by the camera 121 according to the object information database 111. In other words, the object detection client 122 may perform the object recognition processing on the video captured by the camera 121, and determine whether the video captured by the camera 121 has a target object consistent with any one of objects in the object information database 111. In response to the video captured by the camera 121 having the target object consistent with any one of objects the object information database 111, the object positioning information is obtained according to capturing information of the video corresponding to the target object, such as a location, a time and other information. The object positioning information is sent to the cloud platform 110.

In the embodiment of the present disclosure, the object positioning information may include at least two of object information, geographic positioning information and video related to the object information, and may also include other relevant information beneficial to event processing. The object information refers to the object consistent with the object information database in the video determined after performing the object recognition processing on the captured video. The geographic positioning information refers to capturing location information corresponding to the video in which the object information is found, for example, GPS (Global Positioning System) information. The video related to the object information refers to a video segment in which the object information may be recognized in the video captured by the camera. It may be understood that the relevant staff may determine the positioning information corresponding to the target object according to the object positioning information, which may provide help for processing of relevant events, and then improve efficiency of event processing.

For example, as shown in FIG. 2, take a scene of relevant staff investigating missing children as an example to introduce operating principle of the movable device. The object information database may include face images of the missing children. The movable device may extract face information in the captured video according to the face images of the missing children in the object information database, and compare the face information in the video with the face images of the missing children to determine whether there is a face in the captured video consistent with a face image of a certain missing child. In response to a face in the captured video being consistent with the face image of a certain missing child, the movable device may determine location information where the video is captured, the corresponding face information of the missing child, and a video segment including the face of the missing child as the positioning information of the target object, and send the positioning information of the target object to the cloud platform. In response to there is no face in the captured video consistent with the face images of the missing children, the movable device may discard the extracted face information and not send data to the cloud platform. Relevant law enforcement personnel may analyze the positioning information received by the cloud platform to determine trajectory information of the missing child, which may improve efficiency of the law enforcement personnel in tracking the missing child.

It may be noted that in the technical solution of the present disclosure, acquisition, storage and application of monitoring information and relevant personal information comply with provisions of relevant laws and regulations and do not violate public order and good customs.

According to the system for object detection proposed in embodiments of the present disclosure, the camera provided on the movable device is configured to capture the surrounding environment, thus improving field of view for shooting and coverage of information compared with a fixed camera. The movable device may realize the communication with the cloud platform by installing the object detection client. The movable device may perform object recognition processing on the video captured by the camera, and send the object positioning information to the cloud platform, which may improve efficiency and accuracy of the object detection.

Based on the above embodiments, in order that relevant personnel is capable of timely processing the object positioning information received by the cloud platform, the present disclosure proposes another system for object detection.

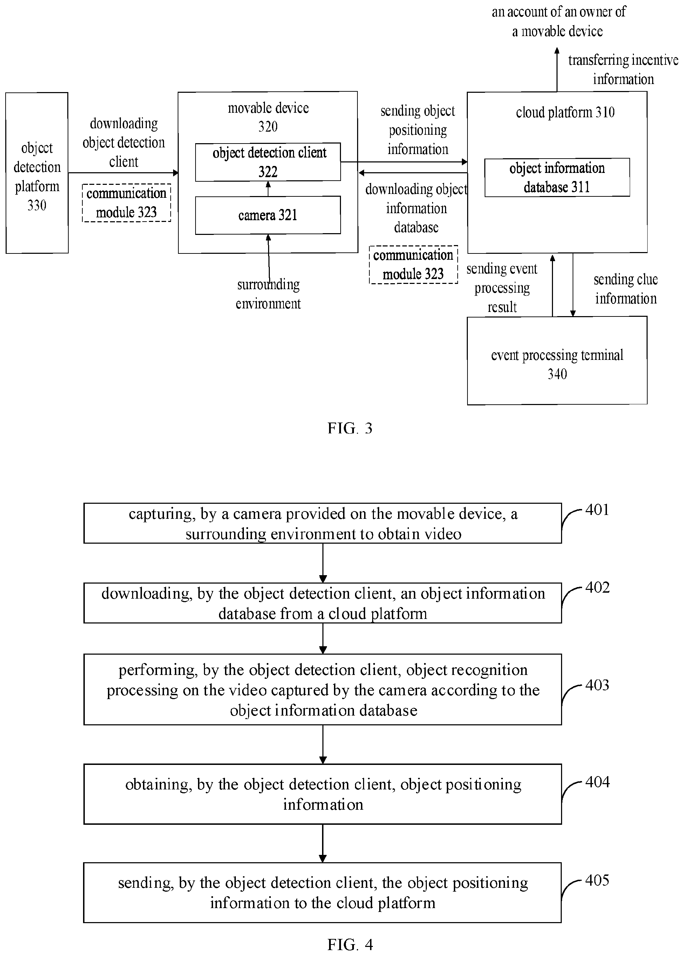

FIG. 3 is a schematic diagram illustrating a system for object detection according to another embodiment of the present disclosure. As illustrated in FIG. 3, based on the system for object detection illustrated in FIG. 1, the system for object detection illustrated in FIG. 3 further includes an event processing terminal 340 communicated with the cloud platform 310. In some embodiments of the present disclosure, the cloud platform 310 is configured to convert the obj ect positioning information into corresponding clue information, and send the clue information to the event processing terminal 340. The relevant staff may process an event according to the clue information received by the event processing terminal 340. After processing the event, the event processing result based on the clue information may be sent to the cloud platform 310 through the event processing terminal 340. The cloud platform 310 is also configured to transfer incentive information to an account of an owner of the movable device according to the event processing result.

In the embodiment of the present disclosure, the cloud platform 310 is also configured to convert the object positioning information into the corresponding clue information, that is, the cloud platform 310 may perform analysis and calculation according to the received object positioning information and generate the clue information corresponding to the object information. The clue information may be motion trajectory information corresponding to the object information at respective times, or behavior information of the object information, or other clue information capable of obtaining through the object positioning information. For example, in a scene of tracking missing children, in response to the object positioning information including face information, video information and geographic positioning information of the target object, and the target object in the video walking towards a taxi, the cloud platform may determine that the target object takes the taxi at a certain time and a certain place according to the clue information converted from the object location information. After the event processing terminal receives the clue information, the relevant law enforcement personnel may immediately track the taxi through data query, so that the target object may be found according to a driving trajectory of the taxi.

The event processing terminal 340 is configured to send the event processing result based on the clue information to the cloud platform 310, that is, after the relevant staff processes the event according to the clue information received by the event processing terminal 340, the event processing result may be reported to the cloud platform 310 through the event processing terminal 340. In this way, the cloud platform 310 may not only timely update object information database according to the event processing result, but also determine whether the corresponding clue information is effective. For example, in response to the event processing result received by the cloud platform 310 being success, the cloud platform 310 may remove the object information related to the event from the object information database to ensure the timely update of the object information database. For another example, in response to the event processing result received by the cloud platform 310 being failure, the cloud platform 310 may recheck the corresponding object positioning information to prevent clue conversion errors.

In order to encourage the owner of the movable device to provide the object positioning information for the cloud platform through the system for the object detection, in the embodiment of the present disclosure, the cloud platform 310 is also configured to transfer the incentive information to the account of the owner of the movable device according to the event processing result. In response to receiving the object positioning information sent by the movable device 320, the cloud platform 310 may obtain a unique identification of the movable device sending the object positioning information, so that the staff with corresponding authority may obtain the account information of the owner of the movable device based on relevant data query. In addition, the incentive information may be information that urges the owner of the movable device to participate his movable device in the system for the object detection. For example, the movable device is a vehicle, and the incentive information may be virtual currency, a number of years of compulsory insurance corresponding to the vehicle, an ETC (Electronic Toll Collection) card corresponding to the vehicle, etc.

In addition, in the embodiment of the present disclosure, as illustrated in FIG. 3, the movable device 320 also includes a communication module 323 configured to communicate via network with a cloud platform 310 and an object detection platform 330. The network may be 3G, 4G or 5G mobile communication network, or Wi-Fi wireless network, and support TCP/IP and other related network protocols.

It is be noted that 310 to 330 illustrated in FIG. 3 have the same structure and function as 110 to 130 illustrated FIG. 1, which will not be repeated here.

According to the system for the object detection proposed in the embodiment of the present disclosure, by the event processing terminal communicated with the cloud platform, the cloud platform converts the received object positioning information into clues and sends the clues to the event processing terminal, so as to improve circulation efficiency of object positioning information and efficiency of event processing. In addition, the event processing terminal may send the event processing result to the cloud platform, thus the cloud platform may timely obtain the event processing information and improve synchronization of information. In addition, the cloud platform sends the incentive information to the account of the owner of the movable device according to the event processing result, which may motivate the owner of the movable device to participate in the system for the object detection, and effectively increase the number of movable devices, so as to further expand a coverage of a field of vision for shooting and improve the efficiency of event processing.

The present disclosure provides a movable device.

In embodiments of the present disclosure, the movable device is provided with a camera and installed with an object detection client.

The camera is configured to capture a surrounding environment to obtain video.

The object detection client is downloaded and installed by the movable device from an object detection platform.

The object detection client is configured to download an object information database from a cloud platform, and perform object recognition processing on the video captured by the camera according to the object information database, obtain object positioning information, and send the object positioning information to the cloud platform.

In some embodiments, the object positioning information comprises at least two of: object information, geographic positioning information, and video related to the object information.

In some embodiments, the object detection client is configured to: determine a target object in the video captured by the camera consistent with any one of objects in the object information database by performing object recognition processing on the video captured by the camera.

In some embodiments, the object detection client is configured to: after the target object in the video captured by the camera consistent with any one of objects in the object information database is determined, obtain the object positioning information according to capturing information of the video corresponding to the target object.

In some embodiments, the object information database includes a plurality of face images, and the object detection client is configured to: extract face information in the captured video by performing object recognition processing on the video captured by the camera; compare the face information extracted from the video with the face images in the object information database to determine a face in the captured video consistent with any one of the face images in the object information database.

In some embodiments, the object detection client is configured to: after the face in the captured video consistent with any one of the face images in the object information database is determined, determine location information where the video is captured, face information corresponding to the determined face, and a video segment comprising the determined face as the object positioning information.

The present disclosure provides a method for object detection.

FIG. 4 is flow chart illustrating a method for object detection according to an embodiment of the present disclosure. The method is applicable for a movable device. The method includes the following blocks.

At block 401, a surrounding environment to obtain video is captured by a camera provided on the movable device. The movable device is installed with an object detection client, and the object detection client is downloaded by the movable device from an object detection platform.

At block 402, an object information database is downloaded from a cloud platform by the object detection client.

At block 403, object recognition processing is performed on the video captured by the camera according to the object information database by the object detection client.

At block 404, object positioning information is obtained by the object detection client.

At block 405, the object positioning information is sent to the cloud platform by the object detection client.

In some embodiments, the object positioning information comprises at least two of: object information, geographic positioning information, and video related to the object information.

In some embodiments, performing the object recognition processing on the video captured by the camera according to the object information database includes:
determining a target object in the video captured by the camera consistent with any one of objects in the object information database by performing object recognition processing on the video captured by the camera.

In some embodiments, obtaining the object positioning information includes:
after the target object in the video captured by the camera consistent with any one of objects in the object information database is determined, obtaining the object positioning information according to capturing information of the video corresponding to the target object.

In some embodiments, the object information database comprises a plurality of face images, performing the object recognition processing on the video captured by the camera according to the object information database includes:
extracting face information in the captured video by performing object recognition processing on the video captured by the camera;
comparing the face information extracted from the video with the face images in the object information database to determine a face in the captured video consistent with any one of the face images in the object information database.

In some embodiments, obtaining the object positioning information includes:
after the face in the captured video consistent with any one of the face images in the object information database is determined, determining location information where the video is captured, face information corresponding to the determined face, and a video segment comprising the determined face as the object positioning information.

The present disclosure also provides a computer-readable storage medium and a computer program product.

In an embodiment of the present disclosure, the computer-readable storage medium stores computer instructions. When the computer instructions are executed, the computer is caused to implement the method according to any one of the above embodiments.

In an embodiment of the present disclosure, the computer program product includes a computer program. The computer program is caused to implement the method according to any one of the above embodiments when executed by a processor.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

## Claims

1. A system for object detection, comprising:
a cloud platform (110), configured with an object information database (111);
a movable device (120), communicated with the cloud platform (110), provided with a camera (121) and installed with an object detection client (122); wherein,
the camera (121) is configured to capture a surrounding environment to obtain video;
the object detection client (122) is downloaded and installed by the movable device (120) from an object detection platform (130), and is configured to download the object information database (111) from the cloud platform (110), and perform object recognition processing on the video captured by the camera (121) according to the object information database (111), obtain object positioning information, and send the object positioning information to the cloud platform (110).

2. The system according to claim 1, further comprising an event processing terminal (340) communicated with the cloud platform (310), wherein,
the cloud platform (310) is configured to convert the object positioning information into corresponding clue information, and send the clue information to the event processing terminal (340);
the event processing terminal (340) is configured to send an event processing result based on the clue information to the cloud platform (310).

3. The system according to claim 2, wherein the cloud platform (310) is configured to transfer incentive information to an account of an owner of the movable device (320) according to the event processing result.

4. The system according to any one of claims 1-3, wherein the object detection platform (311) is communicated with the movable device (320), and configured with an installation package of the object detection client (322).

5. The system according to claim 4, wherein the movable device (320) further comprises:
a communication module (323), configured to communicate via network with the cloud platform (310) and the object detection platform (330).

6. The system according to any one of claims 1-5, wherein the movable device (320) is a mobile terminal or a vehicle.

7. The system according to any one of claims 1-6, wherein the object positioning information comprises at least two of:
object information, geographic positioning information, and video related to the object information.

8. A movable device, provided with a camera and installed with an object detection client; wherein,
the camera is configured to capture a surrounding environment to obtain video;
the object detection client is downloaded and installed by the movable device from an object detection platform; and
the object detection client is configured to download an object information database from a cloud platform, and perform object recognition processing on the video captured by the camera according to the object information database, obtain object positioning information, and send the object positioning information to the cloud platform.

9. The movable device according to claim 8, wherein the object positioning information comprises at least two of:
object information, geographic positioning information, and video related to the object information.

10. The movable device according to claim 8 or 9, wherein the object detection client is configured to:
determine a target object in the video captured by the camera consistent with any one of objects in the object information database by performing object recognition processing on the video captured by the camera.

11. The movable device according to claim 10, wherein the object detection client is configured to:
after the target object in the video captured by the camera consistent with any one of objects in the object information database is determined, obtain the object positioning information according to capturing information of the video corresponding to the target object.

12. The movable device according to any one of claims 8-11, wherein the object information database comprises a plurality of face images, the object detection client is configured to:
extract face information in the captured video by performing object recognition processing on the video captured by the camera;
compare the face information extracted from the video with the face images in the object information database to determine a face in the captured video consistent with any one of the face images in the object information database.

13. The movable device according to claim 12, the object detection client is configured to:
after the face in the captured video consistent with any one of the face images in the object information database is determined, determine location information where the video is captured, face information corresponding to the determined face, and a video segment comprising the determined face as the object positioning information.

14. A method for object detection, applicable for a movable device, and comprising:
capturing (401), by a camera provided on the movable device, a surrounding environment to obtain video, wherein the movable device is installed with an object detection client, and the object detection client is downloaded by the movable device from an object detection platform;
downloading (402), by the object detection client, an object information database from a cloud platform;
performing (403), by the object detection client, object recognition processing on the video captured by the camera according to the object information database;
obtaining (404), by the object detection client, object positioning information; and
sending (405), by the object detection client, the object positioning information to the cloud platform.

15. A computer readable storage medium having a computer program stored thereon, wherein the computer program is configured to implement a method for object detection when executed by a processor, and the method comprises:
capturing, by a camera provided on the movable device, a surrounding environment to obtain video, wherein the movable device is installed with an object detection client, and the object detection client is downloaded by the movable device from an object detection platform;
downloading, by the object detection client, an object information database from a cloud platform;
performing, by the object detection client, object recognition processing on the video captured by the camera according to the object information database;
obtaining, by the object detection client, object positioning information; and
sending, by the object detection client, the object positioning information to the cloud platform.
